# EUROPEAN PATENT APPLICATION

(11) **EP 1 555 525 A1**
(43) Date of publication of application: **20.07.2005**
(21) Application number: 04029176.7
(22) Date of filing: 09.12.2004
(51) Int. Cl.: G01N 27/407

(54) **Oxygen sensor and method of producing same**

(30) Priority: 19.01.2004 JP 2004010133
(71) Applicant: Hitachi Ltd., Tokyo 100-8280 (JP)
(72) Inventor: Sakai, Shoichi c/o Automotive Systems, Isesaki-shi Gunma 372-0023 (JP)
(74) Representative: Weber, Joachim, Dr.

(57) **Abstract**

An oxygen concentration detecting element comprises a base member (2) constructed of an insulating material; an electric heater layer (3) attached to the base member (2), which generates a heat when electrically energized; and an oxygen detecting laminated unit (5,6,7,15) attached to the base member (2). The oxygen detecting laminated unit includes a solid electrolyte layer (5) and reference (6) and detecting electrode layers (7) between which the solid electrolyte layer (5) is operatively sandwiched, The thickness of the oxygen detecting laminated unit is equal to or smaller than 11% of the thickness of the base member.

## Description

### BACKGROUND OF THE INVENTION

### 1. Field of the Invention

The present invention relates in general to an oxygen sensor and a method of producing the same and more specifically, to an oxygen concentration detecting element for the oxygen sensor and a method of producing same.

### 2. Description of the Related Art

In general, a modernized motor vehicle powered by an internal combustion engine is equipped at an exhaust pipe with an oxygen sensor for sensing the oxygen concentration in the exhaust gas from the engine, and based on the oxygen concentration thus sensed, the air/fuel mixture fed to the engine is feedback controlled to have a stoichiometric ratio (viz., A/F = 14.7).

The oxygen sensor has an oxygen concentration detecting element installed therein.

In order to clarify the invention, an oxygen concentration detecting element disclosed in Japanese Laid-open Patent Application (Tokkaihei) 7-27737 will be briefly described with reference to Fig. 6 of the accompanying drawings.

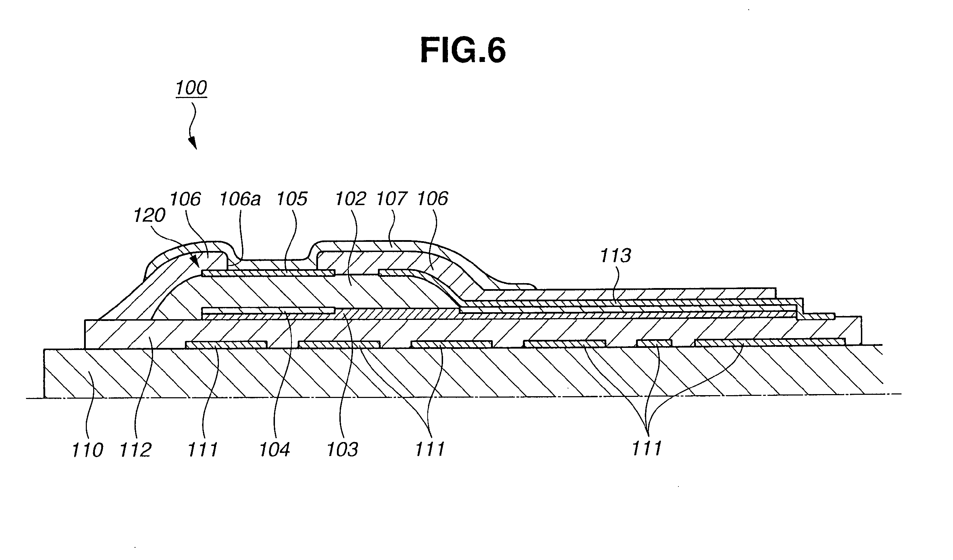

Fig. 6 shows an axially sectional half view of oxygen concentration detecting element 100 of the published application. As shown, oxygen concentration detecting element 100 comprises a cylindrical center rod 110 that serves as a structural base, a heater pattern 111 that is disposed (or printed) on and about an outer surface of cylindrical center rod 110, a heater insulating layer 112 that is lined on the outer surface of cylindrical center rod 110 while covering heater pattern 111, a porous layer 103 that is formed on an outer surface of insulating layer 112, a reference electrode layer 104 that is disposed on and about a part of porous layer 103, a solid electrolyte layer 102 that is disposed on and about porous layer 103 while covering reference electrode layer 104, a detecting electrode layer 105 that is disposed on solid electrolyte layer 102, a dense layer 106 that covers entirely outer surfaces of detecting electrode layer 105 and solid electrolyte layer 102 except an oxygen gas introduction part 106a exposed to the outer surface of detecting electrode layer 105, and a protecting layer 107 that covers an outer surface of dense layer 106 and an outer surface of detecting electrode layer 105 at oxygen gas introduction part 106a. In use, dense layer 106 and protecting layer 107 are exposed to a flow of gas that is to be measured, that is, the exhaust gas flowing in the exhaust pipe from the internal combustion engine.

Reference electrode layer 104 and detecting electrode layer 105 are both constructed of an electrically conductive material through which oxygen gas can permeate. The two electrode layers 104 and 105 have respective lead line portions. Only lead line portion 113 for detecting electrode layer 105 is shown. That is, by connecting these line portions 113 to a voltage meter (not shown), an output voltage appearing between reference electrode layer 104 and detecting electrode layer 105 is measured.

That is, solid electrolyte layer 102 and the above-mentioned two electrode layers 104 and 105 constitute an oxygen detecting portion 120.

Dense layer 106 is constructed of a material that does not permit penetration of oxygen gas therethrough. Protecting layer 107 is constructed of a material through which harmful gases in the exhaust gas can not permeate but oxygen gas can permeate.

In the following, operation of oxygen concentration detecting element 100 having the above-mentioned construction will be described with reference to the same drawing (viz., Fig. 6).

When electrically energized, heater pattern 111 produces heat, and the heat thus produced is transmitted to oxygen detecting portion 120 through insulating layer 112. With this, solid electrolyte layer 102 becomes activated. Oxygen in the exhaust gas penetrates through protecting layer 107 and reaches the outer surface of solid electrolyte layer 102. Oxygen in the atmosphere, that forms a reference, penetrates through porous layer 103 and reaches reference electrode layer 104. When there is a difference in oxygen concentration between inner and outer surfaces of solid electrolyze layer 102, oxygen ions are moved in the layer 102 to produce an electromotive force between reference and detecting electrode layers 104 and 105 in accordance with the difference in oxygen concentration. Thus, an output voltage is obtained which varies in accordance with the oxygen concentration difference.

### SUMMARY OF THE INVENTION

Usually, for production of oxygen concentration detecting element 100 of the above-mentioned type, paste materials for heater pattern 111, cylindrical insulating layer 112, reference electrode layer 104, solid electrolyte layer 102 and detecting electrode layer 105 are printed on the associated surfaces by means of a screen printing method and thereafter a green body thus produced is baked or sintered at a temperature of about 1400°C to 1500°C for a given time. Cylindrical center rod 110 is constructed of an electrically insulating material (for example, material including alumina as a major material), and solid electrolyte layer 102 is constructed of an oxygen ion conduction material (for example, material including zirconia as a major material) that conducts oxygen ion.

However, because of difference in nature of the used materials, cylindrical center rod 110 and solid electrolyte layer 102 show a different degree of contraction during and after the baking or sintering. This difference in contraction tends to cause production of undesired cracks of solid electrolyte layer 102.

It is therefore an object of the present invention to provide an oxygen concentration detecting element and a method of producing the same, which are free of the above-mentioned cracks.

That is, according to the present invention, there are provided an oxygen concentration detecting element and a method of producing the same, which produce no cracks on a solid electrolyte layer even when a cylindrical base member and the solid electrolyte layer show different degree of contraction during and after the baking or sintering.

In accordance with a first aspect of the present invention, there is provided an oxygen concentration detecting element which comprises a base member constructed of an insulating material; an electric heater layer attached to the base member to generate a heat when electrically energized; and an oxygen detecting laminated unit attached to the base member, the oxygen detecting laminated unit including a solid electrolyte layer and reference and detecting electrode layers between which the solid electrolyte layer is operatively sandwiched, wherein the thickness of the oxygen detecting laminated unit is equal to or smaller than 11% of the thickness of the base member.

In accordance with a second aspect of the present invention, there is provided An oxygen concentration detecting element which comprises a cylindrical base member constructed of a ceramic material containing alumina; an electric heater layer attached to the base member to generate a heat when electrically energized, the heater layer being constructed of tungsten or platinum; and an oxygen detecting laminated unit attached to the base member, the oxygen detecting laminated unit including a solid electrolyte layer and reference and detecting electrode layers between which the solid electrolyte layer is operatively sandwiched, the solid electrolyte layer being constructed of a material containing zirconia and yttria, the reference and detecting electrode layers being constructed of a conductive material that includes platinum and allows oxygen gas to penetrate therethrough, wherein the thickness of the oxygen detecting laminated unit is equal to or smaller than 11% of the diameter of the cylindrical base member.

In accordance with a third aspect of the present invention, there is provided a method of producing an oxygen concentration detecting element, which comprises the steps of (a) rotating a cylindrical base member about its axis; (b) applying a paste material for a heater pattern onto a cylindrical outer surface of the cylindrical base member via a screen printing; (c) applying a paste material for a heater insulating layer onto an outer surface of the printed heater pattern via a screen printing; (d) applying a paste material for a stress damping layer onto the outer surface of the cylindrical base member via screen printing; (e) applying a paste material for a reference electrode layer onto an outer surface of the printed stress damping layer via screen printing; (f) applying a paste material for a solid electrolyte layer onto an outer surface of the printed reference electrode layer via screen printing; (g) applying a paste material for a detecting electrode layer onto an outer surface of the printed solid electrolyte layer via screen printing thereby constituting a green body of the oxygen concentration detecting element, the green body having a green part for an oxygen detecting laminated unit that includes the printed reference electrode layer, the printed solid electrolyte layer and the printed detected detecting electrode layer; and (h) baking the green body to sinter the same, wherein the screen printing is of a thin-film printing type and wherein the thickness of the oxygen detecting laminated unit thus sintered is equal to or smaller than 11% of the thickness of the cylindrical base member.

### BRIEF DESCRIPTION OF THE DRAWINGS

Other objects and advantages of the present invention will become apparent from the following description when taken in conjunction with the accompanying drawings, in which:
Fig. 1 is a diametrically sectional view of an oxygen concentration detecting element which is a first embodiment of the present invention;
Fig. 2 is a view schematically showing steps for producing the oxygen concentration detecting element of the first embodiment of the present invention;
Fig. 3 is an extend elevation view of the oxygen concentration detecting element of the first embodiment;
Fig. 4 is a graph showing a mechanical strength of the oxygen concentration detecting element of the present invention in terms of a relationship between a thickness of printed layer and a stress generated in the direction of the thickness of the printed layer under a condition wherein the diameter of a cylindrical center rod of the element is 5mm and the element is kept in an atmosphere of temperature of about 25 to 600°C;
Fig. 5 is a view similar to Fig. 1, but showing an oxygen concentration detecting element of a second embodiment of the present invention; and
Fig. 6 is an axially sectional half view of a conventional oxygen concentration detecting element.

### DETAILED DESCRIPTION OF THE EMBODIMENTS

In the following, two embodiments 1A and 1B of the present invention will be described in detail with reference to the accompanying drawings.

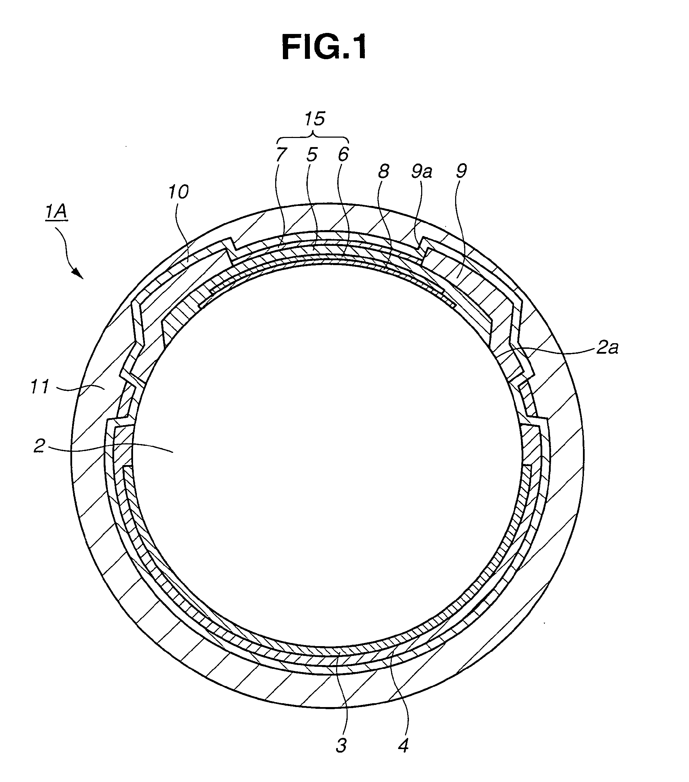

Referring to Figs. 1 to 3, particularly Fig. 1, there is shown in a sectional manner an oxygen concentration detecting element 1A which is the first embodiment of the present invention.

As shown in Fig. 1, oxygen concentration detecting element 1A comprises a cylindrical center rod (or base member) 2 that serves as a structural base, a heater pattern 3 that is disposed on a half zone of a cylindrical outer surface 2a of cylindrical center rod 2, a heater insulating layer 4 that covers entirely an outer surface of heater pattern 3, a solid electrolyte layer 5 that is disposed on outer surface 2a of cylindrical center rod 2 at a diametrically opposite zone of heater pattern 3, a reference electrode layer 6 that is disposed on an inner surface of solid electrolyte layer 5 and a detecting electrode layer 7 that is disposed on an outer surface of solid electrolyte layer 5, a stress damping layer 8 that is intimately disposed between the inner surface of reference electrode layer 6 and outer surface 2a of cylindrical center rod 2, a dense layer 9 that covers the outer surface of solid electrolyte layer 5 and covers detecting electrode layer 7, a rectangular window opening 9a that is defined by dense layer 9, a print protecting layer 10 that entirely covers dense layer 9 and heat insulating layer 4 and a spinel protecting layer 11 that covers entirely print protecting layer 10.

Cylindrical center rod 2 is constructed of an insulating material, such as a ceramic material that includes alumina as the major material. As shown, center rod 2 is of a cylindrical solid member with the cylindrical outer surface 2a.

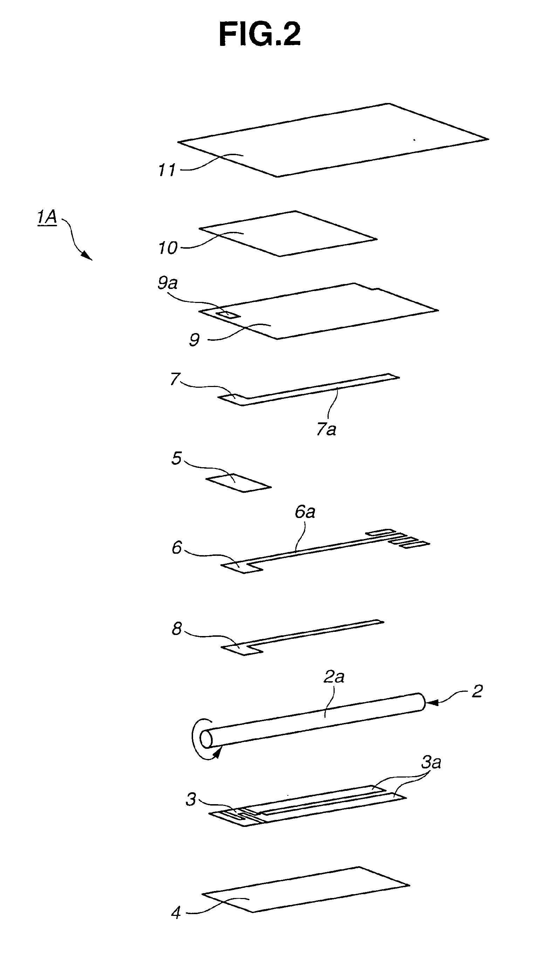

Heater pattern 3 is constructed of a conductive material, such as tungsten, platinum or the like that generates heat when electrically energized. As will be seen from Fig. 2, heater pattern 3 is integrally formed with lead line portions 3a. That is, when electrically energized through lead line portions 3a, heater pattern 3 generates a heat for heating and thus activating solid electrolyte layer 5.

Referring back to Fig. 1, heater insulating layer 4 is constructed of an insulating material and functions to insulate heater pattern 3 from the surrounding parts.

Solid electrolyte layer 5 is constructed of a material that includes zirconia as a major material. For production of solid electrolyte layer 5, a powder of zirconia and a given wt.% of powder of yttria are mixed and added with a predetermined liquid to prepare a paste material. As will be described hereinafter, the paste material is baked together with other laminated layers. Solid electrolyte layer 5 generates between reference and detecting layers 6 and 7 an electromotive force in accordance with a difference in oxygen concentration of surrounding atmosphere. That is, due to a difference in oxygen concentration, oxygen ions are moved in solid electrolyte layer 5 in the direction of the thickness of the layer 5.

Solid electrolyte layer 5 and reference and detecting electrode layers 6 and 7 thus constitute an oxygen detecting laminated unit 15 that converts the detected oxygen concentration to a corresponding electric signal.

It is to be noted that, in the present invention, the thickness of oxygen detecting laminated unit 15 is equal to or smaller than 11% of the diameter of cylindrical center rod 2. In the illustrated embodiment 1A, the diameter of the rod 2 is 5mm and the thickness of oxygen detecting laminated unit 15 is equal to or smaller than 560µm.

Both reference and detecting electrode layers 6 and 7 are constructed of a conductive material that includes platinum as a major material and allows oxygen gas to penetrate therethrough. As is seen from Fig. 2, reference and detecting electrode layers 6 and 7 are respectively formed with lead line portions 6a and 7a. That is, the output power produced between reference and detecting electrode layers 6 and 7 is led to a meter section (not shown) through lead line portions 6a and 7a.

Referring back to Fig. 1, stress damping layer 8 is constructed of a material that contains zirconia and aluminum. Stress damping layer 8 functions to damp a stress difference that would be produced between solid electrolyte layer 5 and cylindrical center rod 2 during the baking or sintering of a green body of solid electrolyte layer 5. In addition to this function, stress damping layer 8 forms a gas escaping passage through which oxygen gas that has been transmitted to reference electrode layer 6 through solid electrolyte layer 5 is led to an escaping path (not shown).

Dense layer 9 is constructed of a material, such as a ceramic material like alumina, that does not permit penetration of oxygen gas therethrough. Dense layer 9 entirely covers the outer surface of solid electrolyte layer 5. Detecting electrode layer 7 is exposed to rectangular window opening 9a of dense layer 9. That is, in use, oxygen gas is led to detecting electrode layer 7 through only the rectangular window opening 9a.

Print protecting layer 10 covers an outer surface of detecting electrode layer 7 that is exposed to rectangular window opening 9a of dense layer 9. Print protecting layer 10 is constructed of a material that does not permit penetration of harmful gases, particles and dusts in the exhaust gas therethrough but permits penetration of oxygen gas therethrough. The material is for example a porous member that is produced from a mixture of an aluminum powder and a magnesium oxide powder.

Spinel protecting layer 11 is constructed of a porous material that permits penetration of oxygen gas therethrough. Spinel protecting layer 11 is rougher in porosity than print protecting layer 10.

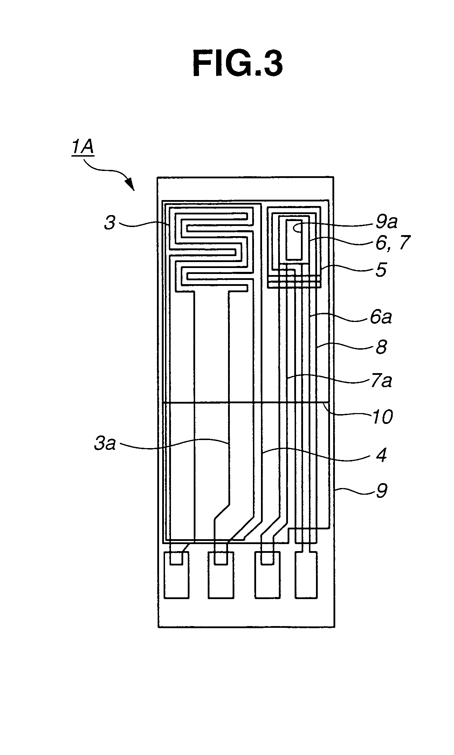

Fig. 3 is an extend elevation of oxygen concentration detecting element 1A of the first embodiment, schematically showing the arrangement of essential parts of the detecting element 1A.

In the following, a method of producing oxygen concentration detecting element 1A of the first embodiment will be described with reference to Fig. 2.

First, cylindrical center rod 2 produced from a ceramic material via an injection molding is prepared. As is described hereinabove, the ceramic material includes alumina as a major material.

Then, a paste material for heater pattern 3 is screen printed on a cylindrical half zone of outer surface 2a of cylindrical center rod 2 while rotating the rod 2. As is described hereinabove, a conductive material is used for the material of heater pattern 3, which is tungsten, platinum or the like, that generates heat when electrically energized. A so-called thick-film printing method is employed.

Then, while rotating the center rod 2, a paste material for heater insulating layer 4 is screen printed on the cylindrical half zone of outer surface 2a of the center rod 2 in a manner to entirely cover printed heater pattern 3.

Then, a paste material for stress damping layer 8 is screen printed on outer surface 2a of the center rod 2 at a diametrically opposite zone of the printed heater pattern 3 while rotating the center rod 2.

Then, while rotating the center rod 2, a paste material for reference electrode layer 6 is screen printed on the printed stress damping layer 8. As is understood from Fig. 1, the printed reference electrode layer 6 is neatly put on the printed stress damping layer 8 without jutting out from the damping layer 8. As is described hereinabove, printed reference electrode layer 6 contains platinum as the major material and has lead line portion 6a integrally formed therewith.

Then, as will be understood from Fig. 1 as well as Fig. 2, while rotating the center rod 2, a paste material for solid electrolyte layer 5 is screen printed on a part of the diametrically opposite zone of outer surface 2a of the center rod 2 while covering essential enlarged portions of both of printed stress damping layer 8 and printed reference electrode layer 6. As is described hereinabove, the paste material for solid electrolyte layer 5 includes zirconia as a major material.

Then, as will be understood from Fig. 1 as well as Fig. 2, while rotating the center rod 2, a paste material for detecting electrode layer 7 is screen printed on a back surface of printed electrolyte layer 5. As is described hereinabove, printed detecting electrode layer 7 contains platinum as the major material and has lead line portion 7a integrally formed therewith.

It is to be noted that the paste material for lead line portion 6a of reference electrode layer 6 and the paste material for lead line portion 7a of detecting electrode layer 7 are located at circumferentially different positions and thus the respective lead line portions 6a and 7a are electrically insulated from each other.

Then, as will be understood from Fig. 1 as well as Fig. 2, while rotating the center rod 2, a paste material for dense layer 9 is screen printed on the diametrically opposite zone of the center rod 2 while covering printed detecting electrode layer 7 and printed electrolyte layer 5 except a part of the printed detecting electrode layer 7. As is seen from Fig. 9, the paste material for dense layer 9 is formed with a rectangular window opening 9a to which a base portion of printed detecting electrode layer 7 is exposed. As is described hereinabove, the paste material for dense layer 9 contains ceramic material like alumina. It is important to expose the base portion of detecting electrode layer 7 to rectangular window opening 9a.

Then, as will be understood from Figs. 1 and 2, while rating the cylindrical center rod 2, a paste material for print protecting layer 10 is screen printed almost entirely on and about the cylindrical outer surface of the center rod 2 while covering essential portions of the printed layers 3, 4, 8, 6, 5, 7 and 9 directly and indirectly. As is seen from Fig. 1, an opening of rectangular window opening 9a of dense layer 9 is also covered by the printed protecting layer 10. As is described hereinabove, the paste material for print protecting layer 10 contains aluminum and magnesium oxide.

Then, as is seen from Figs. 1 and 2, while rotating the cylindrical center rod 2, a paste material for spinel protecting layer 11 is screen printed entirely on and about the cylindrical outer surface of the center rod 2 while covering the entire all portions of the printed layers 3, 4, 8, 6, 5, 7, 9 and 10 directly and indirectly. With these steps, the screen printing steps are completed, and as a result, a so-called green body for the oxygen concentration detecting element 1A is produced.

Thereafter, the green body is baked in a sintering furnace (not shown) at a temperature of 1400°C to 1500°C for a given time. With this baking step, the green body is sintered to form a finished product, that is, the oxygen concentration detecting element 1A. In use, the detecting element 1A is set in a case of an oxygen sensor.

In the following, operation of the oxygen concentration detecting element 1A will be briefly described in case wherein the corresponding oxygen sensor is set in an exhaust pipe that extends from an internal combustion engine (not shown). That is, upon assembly, the outer surface of the detecting element 1A is exposed to the interior of the exhaust pipe through openings of the case of the oxygen sensor, and the stress damping layer 8 is communicated with the atmosphere.

Upon operation of the engine, heater pattern 3 is energized to generate a heat for heating and thus activating solid electrolyte layer 5. With this, the oxygen concentration detecting ability of the detecting element 1A is increased.

Under operation of the engine, the exhaust gas from the engine passes by the outer surface of the detecting element 1A. During this flowing of the exhaust gas, oxygen in the exhaust gas is led to solid electrolyte layer 5 through spinel protecting layer 11, print protecting layer 10 and detecting electrode layer 7, and at the same time, oxygen in the atmosphere is collected around reference electrode layer 6. When a difference in oxygen concentration is produced between outer and inner surfaces of solid electrolyte layer 5, oxygen ions are moved in the electrolyte layer 5 thereby to produce an electromotive force between reference and detecting electrode layers 6 and 7. Thus, an output voltage is obtained, which varies in accordance with the oxygen concentration difference, like in the above-mentioned conventional case.

In the following, advantages of oxygen concentration detecting element 1A of the first embodiment will be described.

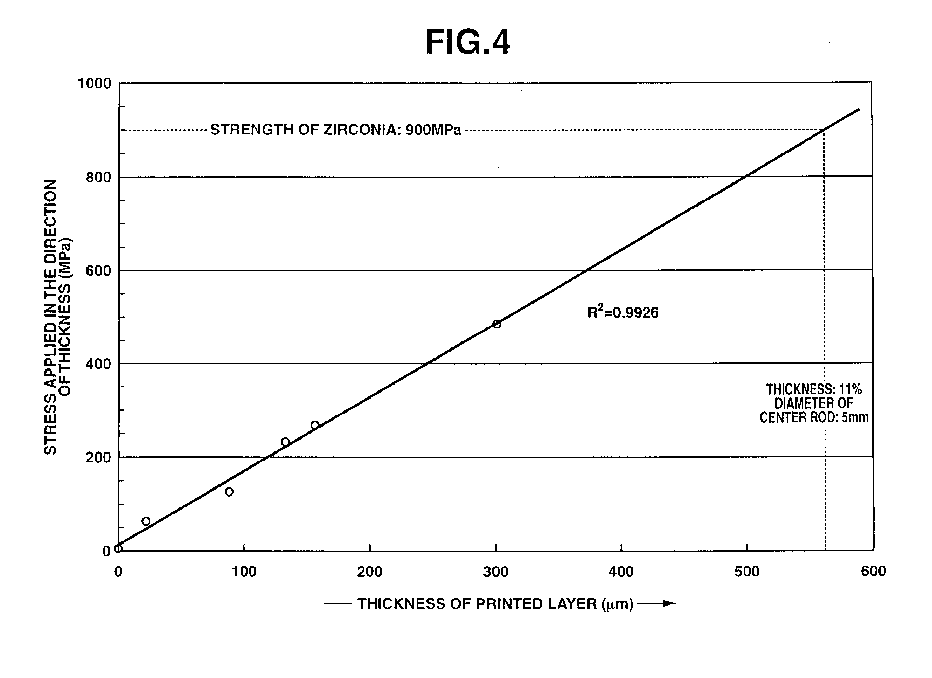

First, in the sintering process of the green body, cylindrical center rod 2 and oxygen detecting laminated unit 15 (viz., the laminated unit including solid electrolyte layer 5 and reference and detecting electrode layers 6 and 7) show a different degree of contraction, which brings about production of a certain stress applied thereto. It has been revealed that such stress increases with increase of rate of thickness of oxygen detecting lamintated unit 15 to thickness of cylindrical center rod 2. However, as is understood from the graph of Fig. 4, since, in detecting element 1A of the first embodiment, the thickness of oxygen detecting laminated unit 15 is equal to or smaller than 11% of that of cylindrical center rod 2, the stress produced as a result of the different degree of contraction can be controlled lower than 900Mpa that the solid electrolyte layer 5 can sufficiently bear.

Second, since the thickness of oxygen detecting laminated unit 15 is equal to or smaller than 11% of that of cylindrical center rod 2, only the contraction stress of center rod 2 stands out. Furthermore, since the contraction of oxygen detecting laminated unit 15 is made only in the direction of the thickness of the same, that is, in the direction of the diameter of cylindrical center rod 2, solid electrolyte layer 5 of oxygen detecting laminated unit 15 is suppressed from having cracks and/or peelings.

Third, since the center rod 2 has the cylindrical outer surface 2a, positioning and setting of the detecting element 1A relative to the exhaust pipe are easily made without worrying at the posture of the same relative to the flow of the exhaust gas. This brings about a stable operation of oxygen detecting element 1A.

Fourth, due to provision of stress damping layer 8 between cylindrical center rod 2 and oxygen detecting laminated unit 15, the stress difference that would be inevitably produced therebetween when the green body of oxygen detecting element 1A is subjected to the sintering is assuredly damped.

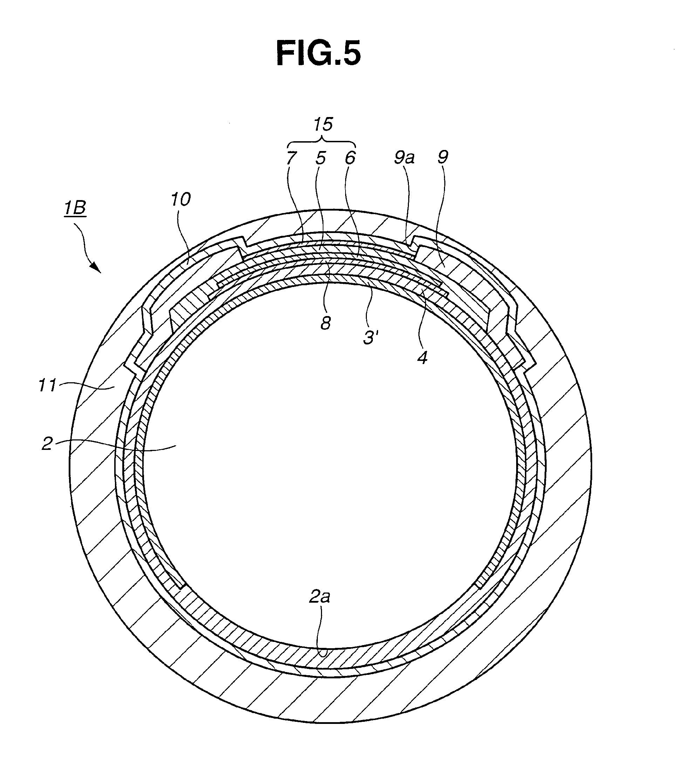

Referring to Fig. 5, there is shown in a sectional manner an oxygen concentration detecting element 1B which is the second embodiment of the present invention.

Since the detecting element 1B of this second embodiment is similar to the above-mentioned detecting element 1A of the first embodiment, only parts or portions that are different from those of the first embodiment 1A will be described in detail in the following description.

As is seen from the drawing, in this second embodiment 1B, the heater pattern 3' is arranged at the same zone as oxygen detecting laminated unit 15. More specifically, heater pattern 3' has an intermediate portion positioned in the vicinity of oxygen detecting laminated unit 15. In other words, heater pattern 3', heating insulating layer 4, stress damping layer 8 and oxygen detecting laminated unit 15 constitute a laminated structure.

In this second embodiment 1B, the thickness of oxygen detecting laminated unit 15 is equal to or smaller than 11 % of the diameter of cylindrical center rod 2, like in the above-mentioned first embodiment 1A. That is, the diameter of the rod 2 is 5mm and the thickness of oxygen detecting laminated unit 15 is smaller than 560µm.

Also in this second embodiment 1B, in the sintering process of the green body, cylindrical center rod 2 and oxygen detecting laminated unit 15 (viz., the laminated unit including solid electrolyte layer 5 and reference and detecting electrode layers 6 and 7) show a different degree of contraction, which brings about production of a certain stress applied thereto. Such stress increases with increase of rate of thickness of oxygen detecting laminated unit 15 to thickness of cylindrical center rod 2. However, as is seen from the graph of Fig. 4, since the thickness of oxygen detecting laminated unit 15 is equal to or smaller than 11% of that of cylindrical center rod 2, the stress produced as a result of the different degree of contraction can be controlled lower than 900Mpa that the solid electrolyte layer 5 can sufficiently bear. In addition to the above, the above-mentioned second, third and fourth advantages of the first embodiment 1A are equally achieved in the second embodiment 1B.

In the following, modifications of the present invention will be described.

If desired, the window opening 9a of dense layer 9 may be circular, elliptic or polygonal in shape, and the center rod 2 may be prismatic in shape.

The entire contents of Japanese Patent Application 2004-010133 filed January 19, 2004 are incorporated herein by reference.

Although the invention has been described above with reference to the embodiments of the invention, the invention is not limited to such embodiments as described hereinabove. Various modifications and variations of such embodiments may be carried out by those skilled in the art, in light of the above description.

## Claims

1. An oxygen concentration detecting element comprising:
a base member constructed of an insulating material;
an electric heater layer attached to the base member to generate a heat when electrically energized; and
an oxygen detecting laminated unit attached to the base member, the oxygen detecting laminated unit including a solid electrolyte layer and reference and detecting electrode layers between which the solid electrolyte layer is operatively sandwiched,
wherein the thickness of the oxygen detecting laminated unit is equal to or smaller than 11% of the thickness of the base member.

2. An oxygen concentration detecting element as claimed in Claim 1, in which the base member is a cylindrical member having a cylindrical outer surface.

3. An oxygen concentration detecting element as claimed in Claim 2, in which the diameter of the cylindrical base member is equal to or smaller than 5mm, and in which the thickness of the oxygen detecting laminated unit is equal to or smaller than 560µm.

4. An oxygen concentration detecting element as claimed in Claim 2, in which the electric heater layer and the oxygen detecting laminated unit are placed at diametrically opposed portions of the cylindrical base member.

5. An oxygen concentration detecting element as claimed in Claim 2, in which the electric heater layer and the oxygen detecting laminated unit are placed are placed at a common zone of the cylindrical outer surface of the base member.

6. An oxygen concentration detecting element as claimed in Claim 1, further comprising a stress damping layer that is intimately disposed between an inner surface of the reference electrode layer and an outer surface of the base member, the stress damping layer damping a stress difference that would be produced between the solid electrolyte layer and the base member during a baking of a green body of the solid electrolyte layer.

7. An oxygen concentration detecting element as claimed in Claim 6, in which the stress damping layer is constructed of a material that contains zirconia and aluminum.

8. An oxygen concentration detecting element as claimed in Claim 6, further comprising a dense layer that entirely covers an outer surface of the solid electrolyte layer and the detecting electrode layer, the dense layer being constructed of a material that prevents penetration of oxygen gas therethrough.

9. An oxygen concentration detecting element as claimed in Claim 8, in which the dense layer is formed with an window opening to which a part of the detecting electrode layer is exposed.

10. An oxygen concentration detecting element as claimed in Claim 9, further comprising a print protecting layer that entirely covers and wraps therein the base member, the electric heater layer, the oxygen detecting laminated unit, the stress damping layer and the dense layer while covering the window opening of the dense layer.

11. An oxygen concentration detecting element as claimed in Claim 10, further comprising a spinel protecting layer that entirely covers and wraps therein the base member, the electric heater layer, the oxygen detecting laminated unit, the stress damping layer, the dense layer and the print protecting layer while covering print protecting layer.

12. An oxygen concentration detecting element comprising:
a cylindrical base member constructed of a ceramic material containing alumina;
an electric heater layer attached to the base member to generate a heat when electrically energized, the heater layer being constructed of tungsten or platinum; and
an oxygen detecting laminated unit attached to the base member, the oxygen detecting laminated unit including a solid electrolyte layer and reference and detecting electrode layers between which the solid electrolyte layer is operatively sandwiched, the solid electrolyte layer being constructed of a material containing zirconia and yttria, the reference and detecting electrode layers being constructed of a conductive material that includes platinum and allows oxygen gas to penetrate therethrough;
wherein the thickness of the oxygen detecting laminated unit is equal to or smaller than 11% of the diameter of the cylindrical base member.

13. A method of producing an oxygen concentration detecting element, comprising the steps of:
(a) rotating a cylindrical base member about its axis;
(b) applying a paste material for a heater pattern onto a cylindrical outer surface of the cylindrical base member via a screen printing;
(c) applying a paste material for a heater insulating layer onto an outer surface of the printed heater pattern via a screen printing;
(d) applying a paste material for a stress damping layer onto the outer surface of the cylindrical base member via screen printing;
(e) applying a paste material for a reference electrode layer onto an outer surface of the printed stress damping layer via screen printing;
(f) applying a paste material for a solid electrolyte layer onto an outer surface of the printed reference electrode layer via screen printing;
(g) applying a paste material for a detecting electrode layer onto an outer surface of the printed solid electrolyte layer via screen printing thereby constituting a green body of the oxygen concentration detecting element, the green body having a green part for an oxygen detecting laminated unit that includes the printed reference electrode layer, the printed solid electrolyte layer and the printed detected detecting electrode layer; and
(h) baking the green body to sinter the same,
wherein the screen printing is of a thin-film printing type and wherein the thickness of the oxygen detecting laminated unit thus sintered is equal to or smaller than 11% of the thickness of the cylindrical base member.

14. A method as claimed in Claim 12, further comprising, between the step (g) and the step (h), the steps of:
(i) applying, via screen printing, a paste material for a dense layer onto an outer surface of the printed detecting electrode layer in such a manner as to wrap therein the cylindrical base member, the printed heater pattern, the printed heater insulating layer, the printed stress damping layer, the printed reference electrode layer, the printed solid electrolyte layer and the printed detecting electrode layer; and
(j) applying, via screen printing, a paste material for a print printing layer onto an outer surface of the printed dense layer in such a manner as to wrap therein the cylindrical base member, the printed heater pattern, the printed heater insulating layer, the printed stress damping layer, the printed reference electrode layer, the printed solid electrolyte layer, the printed detecting electrode layer and the printed dense layer; and
(k) applying, via screen printing, a paste material for a spinel protecting layer onto an outer surface of the printed print printing layer in such a manner as to wrap therein the cylindrical base member, the printed heater pattern, the printed heater insulating layer, the printed stress damping layer, the printed reference electrode layer, the printed solid electrolyte layer, the printed detecting electrode layer, the printed dense layer and the printed print printing layer.
